# EUROPEAN PATENT SPECIFICATION

(11) **EP 1 065 021 B1**
(45) Date of publication and mention of the grant of the patent: **14.01.2004**
(21) Application number: 00850113.2
(22) Date of filing: 21.06.2000
(51) Int. Cl.: B22F 7/06

(54) **Method and device for manufacturing a tool**
Verfahren und Vorrichtung zur Herstellung eines Werkzeugs
Procédé et dispositif pour la fabrication d'un outil

(30) Priority: 02.07.1999 SE 9902595
(43) Date of publication of application: 03.01.2001
(73) Proprietor: SECO TOOLS AB, S-737 82 Fagersta (SE)
(72) Inventor: Bruhn, Johnny, 730 70 Västerfärnebo (SE); Puide, Mattias, 737 44 Fagersta (SE); Grönkvist, Mikael, 603 50 Norrköping (SE)
(74) Representative: Taquist, Lennart

(56) References cited:
- WO-A-96/20057
- WO-A-98/28455

## Description

### Field of the invention

The present invention relates to a method and a machine for manufacturing a tool for chip removing machining comprising a relatively tough core connected to a relatively wear resistant periphery.

### Prior art

It is previously known through for example WO 98/28455 to press a core and a surrounding tube of material powder in two steps. The material powder consist of wolfram carbide (WC) together with cobalt (Co) that are compressed between a punch and a die, and that subsequently are sintered such that the binder metal is melted and binds the carbides to form tool material for chip removing machining. The known technique brings about a plurality of drawbacks, inter alia at manufacture of elongated slender bodies. The powder gives off dust and the formed green body (pressed but not sintered material) will not endure handling to any degree. Furthermore the chip flutes must be ground and the method requires time. The problems have partly been solved by injection moulding of hard metal mixed in a carrier such as indicated in U.S. patent No. 5,947,660. The method of injection moulding brings a high degree of freedom concerning geometry but brings about troubles at manufacture of elongated slender bodies and costly investments in moulds.
Through U.S. patent No. 4,779,440 a tool is previously known according to the preamble of claim 1, for forming a blank for a helix drill. An extruded drill blank having chip flutes of constant pitch along the circumference of the blank is obtained by heating a hard metal powder to extrusion temperature, pressing the heated powder under high energy consumption through a space defined by a mandrel and a nozzle while rotating the blank. The blank is guided by the extrusion in direction past a helical ridge provided at the inside of the nozzle; to shape chip flutes along the blank. A drawback of the known technique is that the produced tool does not obtain maximum length of service time. Another prior art document is WO 96/20057.

### Objects of the invention

One object of the present invention is to provide a method and a machine, whereby the drawbacks of the known technique are eliminated.

Another object of the present invention is to provide a method and a machine whereby elongated slender bodies can be manufactured having optimum length of service time.

These and other objects have been achieved by a method and a machine for manufacturing a tool such as they are defined in the appended claims with reference to the drawings.

### Description of the drawings

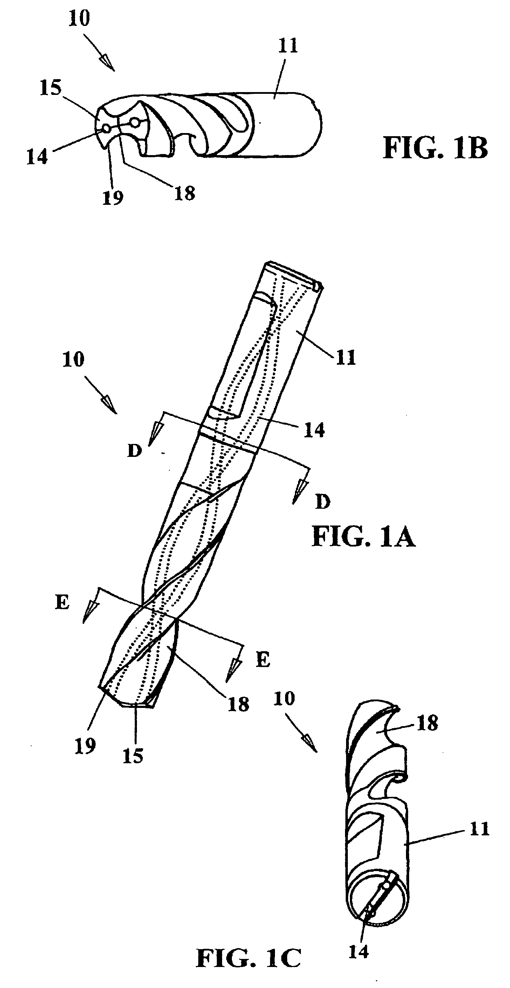

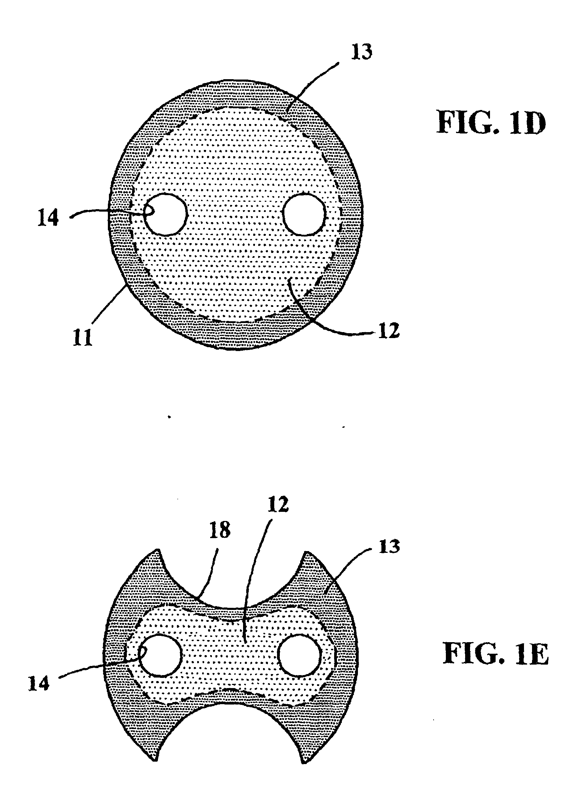

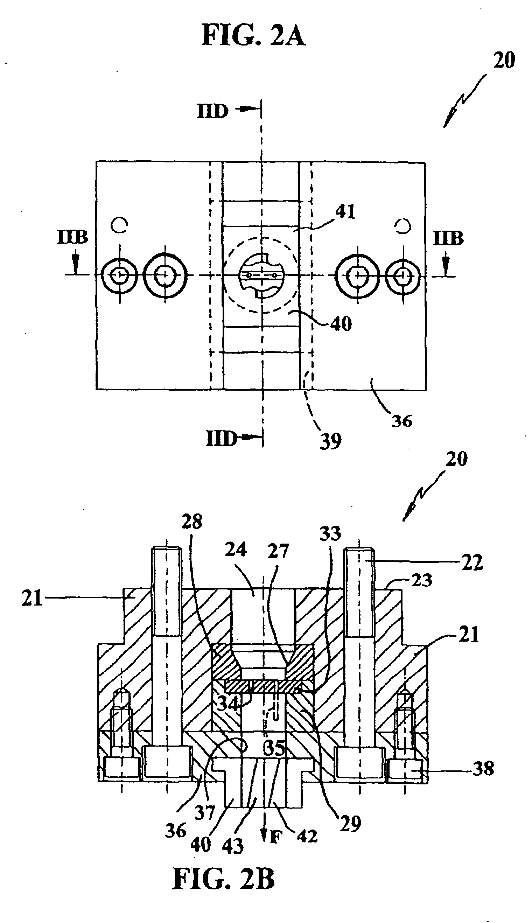

Figs. 1A-1C schematically show a drill according to the present invention in a side view and in front and rear perspective views, respectively. Fig. 1D shows a cross-section according to the line D-D in Fig. 1A. Fig. 1E shows a cross-section according to the line E-E in Fig. 1A. Fig. 2A shows a device according to the present invention for the manufacture of elongated green bodies, in a front view.

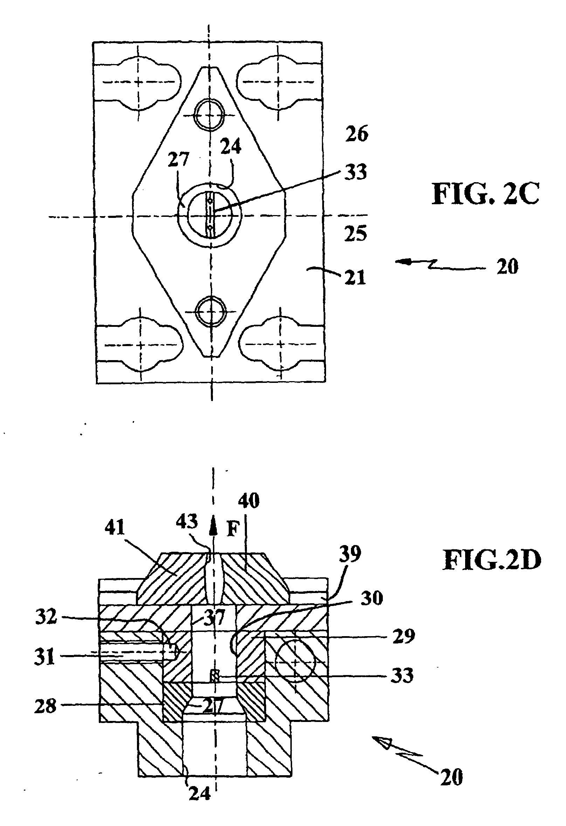

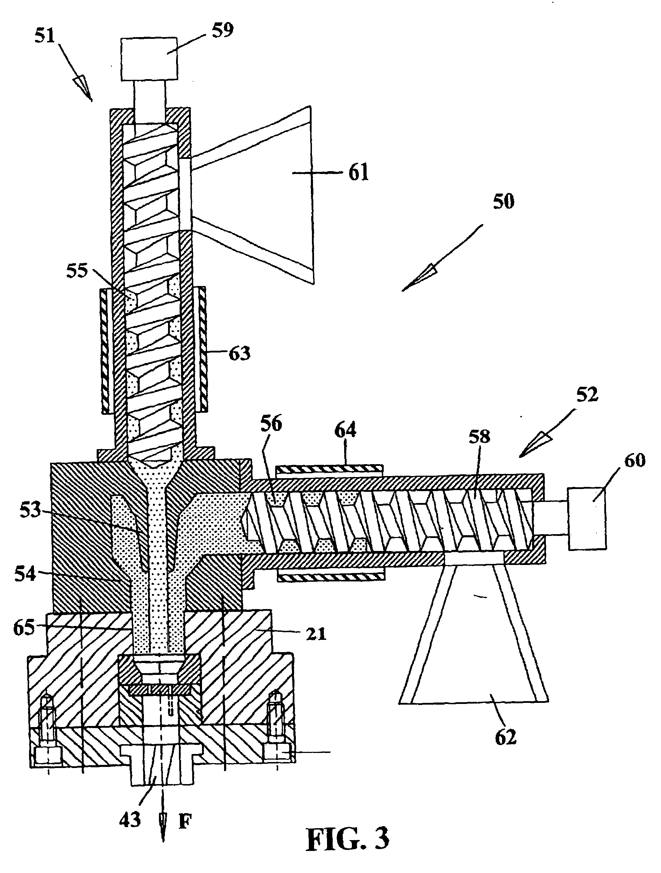

Fig. 2B shows the device in a section according to the line IIB-IIB in Fig. 2A. Fig. 2C shows the device in an end view. Fig. 2D shows the device in section according to the line IID-IID in Fig. 2A. Fig. 3 shows the device and a feed portion.

### Detailed description of the invention

The embodiment of a tool shown in Fig. 1A-1C is a so called helix drill. The drill 10 comprises a substantially solid shank 11 having a first tip forming end comprising at least one cutting edge 19, a number of chip flutes 18 that are equal in number as there are cutting edges. The drill comprises a central portion of relatively tough hard material connected to a peripheral portion 13 of relatively wear resistant hard material. The drill 10 is made in solid hard material, such as extruded hard metal, and includes helical chip flutes 18 and these can extend along the entire body or along a part thereof. The shank 11 shall be secured into a rotatable spindle, not shown. The drill has two upper clearance surfaces 15. The drill is extruded from two different materials where the difference consists in the balance of hard substance (for example wolfram carbide, WC) and binder (for example cobalt, Co). All external surfaces and associated edges are made from the same material, i.e. extruded wear resistant hard metal with a relatively low content of cobalt. The chip flutes 18 of the tool 10 entirely consist of wear resistant hard material that gives both strength and wear resistance to the drill. As is obvious from Figs. 1D and 1E the major part of the cross-section is in the tough portion 12 that is completely surrounded by the wear resistant portion 13 except at its ends. A rigid and hard "shell" is thereby obtained at the drill. Furthermore, the flush channels 14 preferably extend only in the tougher portion. Lines of intersection of the chip flutes 18 and the clearance surfaces 15 form the main cutting edges 19, preferably via reinforcing chamfers, not shown.

A device 20 according to the present invention for the production of elongated green bodies is shown in Figs. 2A-2D. The device 20 comprises a rectangular housing 21 of steel, which is intended to be fastened with for instance bolts to a machine for extrusion, not shown. The housing 21 has two bolts 22 to be fastened in the machine and has a rear surface 23 intended to seal against said machine. The housing has a central through-going recess 24 through which at least two compounds will be pressed. The recess 24 transforms into a diameter reducing restriction 27 in a circular nozzle 28. The nozzle 28 is made from a wear resistant material such as hard metal. The recess 24 then continues in a cylindrical inner, centrally positioned hole 30 into a circular die 29, which is provided next to and in connection with the nozzle 28. The position of the die 29 relative to the housing is determined by cooperation between a stop screw 31 in the housing and a hole 32 extending laterally relative to the principal feed direction F of the compounds. A bar-shaped core 33 is recessed into the die. The core is rectangular and includes two holes 34 to receive elongated pins 35. The pins 35 are intended to project from the core in the feed direction F in case flush channels are to be formed in the blank. The recess 24 then continues in the form of a coaxial hole 37 in a lid 36. The lid 36 is attached to the housing by means of two screws 38 and screws 22. The lid 36 is provided with a T-groove 39, which extends between two long sides of the lid 36. The groove 39 is intended to receive two jaws 40, 41, the basic shape of which according to Fig. 2B essentially form a T. Each jaw 40, 41 includes a spacing 42 facing towards the other jaw. The spacing 42 includes a helical ridge 43 such that when the jaws lie against each other the spacings form the cross-section of a helix drill having chip flutes. The jaws are pressed against each other by means of power means, not shown, and the same means is used in case the jaws will be displaced apart, such as when the blank must be partly cylindrical, for example at the drill shank. Preferably a supporting table is placed in connection with the jaws to support the hot extruded blank.

A feed device 50 connected to the housing 21 is shown in Fig. 3. The feed device 50 comprises at least two separate chambers 51, 52. A central chamber 51 is provided substantially symmetrically about the feed direction F and comprises a central nozzle 53 facing towards the housing 21. At least one second chamber 52 is provided substantially perpendicular to the feed direction F and comprises a nozzle 54 provided in connection with the nozzle 28. The nozzle 54 is provided co-axial with the nozzle 53 but is axially closer to the house 21 then is the latter. The first chamber 51 is provided to contain a first compound 55 having a relatively high cobalt content while the second chamber 52 is provided to contain a second compound 56 having a relatively low cobalt content. The chambers comprises feed worms 57, 58 to drive the two compounds forwards in the feed direction F. Each feed worm is driven by a motor 59, 60. The granules are fed into funnel-like openings 61, 62. The chambers are at least partially surrounded by heaters 63, 64.

The drill or the end milling cutter is manufactured as follows. Hard metal powder having a certain cobalt content and a carrier, for example a polymer, is mixed into compounds and shaped to pellets or granules. That is done such that at least two different compounds are obtained, where the difference lies in the amount of cobalt. The binder will be the matrix of the green body. The difference in the content of binder lies within the interval of 1-10 percentage points by weight. The term "cobalt" shall here be understood as a metallic binder that alternatively can be exchanged for or include other metals, for example nickel, Ni. Then the compounds are preheated to a temperature suitable for the compounds, preferably to the same temperature, and they are inserted into a machine 50 for extrusion. Then the compounds are pressed in the respective chamber 51, 52 at high pressure and at a certain temperature, about 180 °C towards the respective nozzle 53, 54 whereby said second plastic compound will abut against said first plastic compound and forming a substantially cylindrical rod 65. Then the hot compounds reach the core 33 and pass this on each side through the two substantially semi-circular openings formed about the core. The width of the core (see Fig. 2A) is preferably less than the diameter of the inner compound. Rearwardly of the core in the feed direction F the compounds again fuse to a cylindrical rod. If the pins 35 are provided in the core then spaces are formed in the body, which later will constitute flush channels. The pins are chosen long enough to allow the compound to cool such that fusion is avoided. The surroundings of the flush channel can be chosen to consist of only the first or the second compound or a combination thereof by choosing parameters for the extrusion and especially the diameter of the nozzle 53. Then the compounds reach the spacing 42 which is defined by the jaws 40, 41 whereby the compounds due to the ridges 43 are screwn through the jaws and obtain the cross-section of a helix drill. Contrary to prior art the chip flutes of the drill made in accordance with the present invention will consist entirely of the more wear resistant hard metal. When the compounds come out from the jaws they cool quickly due the surrounding temperature and the blank continues to extrude until the chip flute part is sufficiently long. Subsequently the jaws 40, 41 are drawn apart and away from the compound such that a cylindrical shank portion is formed. The length of the shank part is determined either by how long the extrusion is continued or by when the jaws are displaced inwardly such that a new blank is initiated. In the latter case two or more blanks are continuous. The solidified blank can then be cut or be broken, for example by hand.

Then the blank is heated in a separate furnace such that the carrier is burned off and such that the binder metal melts and binds the carbides. Then further machining takes place, such as grinding for example at edge portions, shank portion and clearance surfaces.

Thus the periphery of the tool obtains a higher wear resistance due to the lower content of binder, for example cobalt, while the center portion consist of tougher more cobalt rich hard metal.

With the present method a tool with a long service life can be produced with or without chip flutes and with or without a shank portion and allows a simple handling to a low cost. This can be done without generating dust. In addition at least one jaw can be used to make marks in the shank portion of the blank where a plane is to be ground for chucking. Thereby the grinding volume can be minimized.

The invention is in no way limited to the above described embodiments but can be varied freely within the scope of the appended claims. Thus the invention can be used also for solid end mills. The tool can be coated with layers of for example Al₂O₃, TiN and/or TiCN.

## Claims

1. A method for manufacturing of a tool for chip removing machining comprising a relatively tough core connected to a relatively wear resistant periphery comprising the following steps:
A- feeding a warm first plastic compound (55) having a relatively high content of metallic binder to a die (29) for extrusion and
B- simultaneously feeding a warm second plastic compound (56) having a relatively low content of metallic binder to a die (29) for extrusion around the first plastic compound (55) whereby said second plastic compound (56) will abut against said first plastic compound (55) during the extrusion, thereby forming a substantially cylindrical rod (65); and
C- allowing the rod (65) to pass a portion (42) to form chip flutes (18) whereafter the portion (42) is radially displaced to form a shank part on the blank, and
D- heating said connected compounds (55,56) as a unit to drive off a polymer contained by the compounds and to sinter the remainder to a hard blank whereafter
E- possible finish machining such as grinding is made.

2. The method according to claim 1, wherein hard metal powder and a carrier such as a polymer are mixed and inserted into at least two separate chambers (51,52) before step A.

3. The method according to claim 1 or 2, wherein the portion (42) consists of two relative to each other movable jaws (40,41) which are displaced in opposite directions substantially perpendicularly to the feed direction (F).

4. The method according to claim 1, at which step B includes that the compounds are allowed to pass a core (33) firmly anchored to the die (29) and then fusing the compounds to a cylindrical body rearwardly of the core (33) in the feed direction (F).

5. The method according to claim 5, at which pins (35) are provided in the core by means of which spaces are formed in the blank.

6. A machine for extrusion of a blank for a tool for chip removing machining comprising a relatively tough core connected to a relatively wear resistant periphery, said machine (20) comprising a housing (21), which is intended to be fastened to the machine for extrusion, said housing (21) having a through-going recess (24) through which a first compound shall be extruded in a feed direction (F), said recess (24) including a first nozzle (53) and a hole (30) in a die (29), wherein at least one second nozzle (54) is provided substantially coaxially around the first nozzle to form a second compound (56) substantially around the first compound (55), said machine comprising at least two separate chambers (51,52),
**characterized in that** the machine comprises two jaws (40,41 ), said jaws being provided radially movable relative to the recess (24) with the intention to engage and disengage said second compound to form chip flutes or a shank portion respectively, wherein the jaws (40,41) are radially movable in opposite directions substantially perpendicularly to the feed direction (F).

7. The machine according to claim 6, wherein a core (33) is firmly secured in the die (29) and wherein the die includes a circular space and wherein the core (33) is rectangular and includes two holes (34) to receive elongated pins (35), said pins (35) are intended to project from the core in the feed direction (F) in case flush channels shall be formed in the blank and wherein each jaw (40,41) includes a spacing (42) facing towards the other jaw, said spacing (42) includes a helical ridge (43) such that when the jaws abut against each other the spacings form the cross-section of a helix drill with chip flutes.

## Patentansprüche

1. Verfahren zum Herstellen eines Werkzeuges zum spanabhebenden Bearbeiten, mit einem relativ zähen Kern, der mit einem relativ abriebfesten Umfang verbunden ist, wobei die folgenden Schritte vorgesehen sind:
A - Zuführen eines warmen ersten Kunststoffgemisches (55) mit einem relativ hohen Gehalt an metallischem Binder zu einer Preßmatrize (29) für die Extrusion und
B - gleichzeitig Zuführen eines warmen zweiten Kunststoffgemisches (56) mit einem relativ niedrigen Gehalt an metallischem Binder zu einer Preßmatrix (29) für die Extrusion um das erste Kunststoffgemisch (55), wobei das zweite Kunststoffgemisch (56) während der Extrusion gegen das erste Kunststoffgemisch (55) anstößt, wodurch eine im wesentlichen zylindrische Stange (65) gebildet wird; und
C - Vorsehen der Möglichkeit, daß die Stange (65) einen Abschnitt (42) zur Bildung von Spannuten (18) passiert, wonach der Abschnitt (42) radial verschoben wird, um einen Schaftteil auf dem Rohstück zu bilden, und
D - Erwärmen der verbundenen Gemische (55, 56) als eine Einheit zum Austreiben eines Polymers, welches in den Gemischen enthalten ist, und zum Sintern des Restes zu einem harten Rohstück, dann
E - mögliche Endbearbeitung, wie zum Beispiel Schleifen.

2. Verfahren nach Anspruch 1, wobei Hartmetallpulver und ein Träger, wie zum Beispiel ein Polymer, gemischt und vor dem Schritt A in mindestens zwei separate Kammern (51, 52) eingeführt werden.

3. Verfahren nach Anspruch 1 oder 2, wobei der Abschnitt (42) aus zwei relativ zueinander beweglichen Backen (40, 41) besteht, die in entgegengesetzten Richtungen, im wesentlichen senkrecht zur Vorschubrichtung (F), versetzt werden.

4. Verfahren nach Anspruch 1, bei welchem der Schritt B einschließt, daß die Gemische die Möglichkeit haben, einen fest mit der Preßmatrize (29) verankerten Kern (33) zu passieren, und dann Schmelzen der Gemische zu einem zylindrischen Körper rückseitig des Kerns (33) in Vorschubrichtung (F).

5. Verfahren nach Anspruch 4, bei welchem Stifte (35) in dem Kern vorgesehen sind, mittels deren Räume in dem Rohstück gebildet werden.

6. Maschine zum Extrudieren eines Rohstückes für ein Werkzeug für spanabhebendes Bearbeiten, mit einem relativ zähen Kern, der mit einem relativ abriebfesten Umfang verbunden ist, wobei die Maschine (20) ein Gehäuse (21), welches an der Maschine für die Extrusion befestigt werden soll, aufweist, wobei das Gehäuse (21) eine durchgehende Ausnehmung (24) hat, durch welche ein erstes Gemisch in einer Vorschubrichtung (F) extrudiert werden soll, die Ausnehmung (24) eine erste Düse (53) und ein Loch (30) in einer Preßmatrix (29) aufweist, mindestens eine zweite Düse (54) im wesentlichen koaxial rund um die erste Düse vorgesehen ist, um ein zweites Gemisch (56) im wesentlichen um das erste Gemisch (55) herum zu bilden, wobei die Maschine mindestens zwei getrennte Kammern (51, 52) aufweist, **dadurch gekennzeichnet, daß** die Maschine zwei Backen (40, 41) aufweist, die radial relativ zu der Ausnehmung (24) mit der Maßgabe bewegbar vorgesehen sind, mit dem zweiten Gemisch in Eingriff und von diesem außer Eingriff zu kommen, um Spannuten bzw. einen Schaftabschnitt zu bilden, wobei die Backen (40, 41) in entgegengesetzten Richtungen radial, im wesentlichen senkrecht zu der Vorschubrichtung (F) bewegbar sind.

7. Maschine nach Anspruch 6, wobei ein Kern (33) fest in der Preßmatrix (29) angebracht ist und die Preßmatrix einen kreisförmigen Raum einschließt, der Kern (33) rechteckig ist und zwei Löcher (34) einschließt, um längliche Stifte (35) aufzunehmen, die dafür vorgesehen sind, von dem Kern in der Vorschubrichtung (F) herauszustehen in dem Fall, daß Spülkanäle in dem Rohstück gebildet werden sollen, wobei jede Backe (40, 41) einen zu dem anderen Backen hin gerichteten Raum (42) einschließt, welcher eine schraubenförmige Rippe (43) derart einschließt, daß wenn die Backen gegeneinander anstoßen, die Räume den Querschnitt eines Spiralbohrers mit Spannuten bilden.

## Revendications

1. Procédé de fabrication d'un outil pour l'usinage consistant à retirer les copeaux, comprenant un noyau relativement dur relié à une périphérie relativement résistante à l'usure, comprenant les étapes suivantes :
A- alimenter une matrice (29) avec un premier composé plastique chaud (55) présentant une teneur relativement élevée en liant métallique pour l'extrusion et
B- alimenter en même temps une matrice (29) avec un second composé plastique chaud (56) présentant une teneur relativement basse en liant métallique pour l'extrusion autour du premier composé plastique (55), moyennant quoi ledit second composé plastique (56) sera en butée contre le premier composé plastique (55) pendant l'extrusion, formant de cette façon une tige (65) sensiblement cylindrique ; et
C- permettre à la tige (65) de passer par une partie (42) pour former des rainures de logement de copeaux (18), après quoi la partie (42) est déplacée dans le sens radial pour former une partie de tige sur l'ébauche, et
D- chauffer lesdits composés reliés (55, 56) en tant qu'unité pour éjecter un polymère contenu par les composés et pour fritter le reste sur une ébauche dure après quoi
E- l'usinage-finition tel que le meulage est possible.

2. Procédé selon la revendication 1, dans lequel une poudre métallique dure et un support tel qu'un polymère sont mélangés et insérés à l'intérieur d'au moins deux chambres séparées (51, 52) avant l'étape A.

3. Procédé selon la revendication 1 ou 2, dans lequel la partie (42) est constituée de deux mâchoires (40, 41) mobiles l'une par rapport à l'autre, qui sont déplacées dans des directions opposées sensiblement perpendiculairement à la direction d'alimentation (F).

4. Procédé selon la revendication 1, dans lequel l'étape B comprend le fait que les composés peuvent passer par un noyau (33) fixement ancré sur la matrice (29) et ensuite la fusion des composés sur un corps cylindrique vers l'arrière du noyau (33) dans la direction d'alimentation (F).

5. Procédé selon la revendication 5, dans lequel des broches (35) sont prévues dans le noyau, à l'aide desquelles des espaces sont formés dans l'ébauche.

6. Machine permettant d'extruder une ébauche pour un outil permettant l'usinage destiné à retirer les copeaux, comprenant un noyau relativement dur relié à une périphérie relativement résistante à l'usure, ladite machine (20) comprenant un boîtier (21), qui est destiné à être fixé sur la machine pour l'extrusion, ledit boîtier (21) présentant un évidement de passage (24) à travers lequel un premier composé doit être extrudé dans une direction d'alimentation (F), ledit évidement (24) comprenant une première buse (53) et un trou (30) dans une matrice (29), dans laquelle au moins une seconde buse (54) est prévue de manière sensiblement coaxiale autour de la première buse, pour former un second composé (56) sensiblement autour du premier composé (55), ladite machine comprenant au moins deux chambres (51, 52) séparées,
**caractérisé en ce que** la machine comprend deux mâchoires (40, 41), lesdites mâchoires étant prévues de manière à être mobiles dans le sens radial par rapport à l'évidement (24), dans le but d'engager et de désengager ledit second composé pour former des rainures de logement de copeau ou une partie de tige respectivement, dans laquelle les mâchoires (40, 41) sont mobiles dans le sens radial dans des directions opposées sensiblement perpendiculairement à la direction d'alimentation (F).

7. Machine selon la revendication 6, dans laquelle un noyau (33) est fermement fixé dans la matrice (29), et dans laquelle la matrice comprend un espace circulaire, et dans laquelle le noyau (33) est rectangulaire et comprend deux trous (34) pour recevoir des broches (35) longitudinales, lesdites broches (35) étant destinées à se projeter depuis le noyau dans la direction d'alimentation (F), au cas où des canaux de circulation doivent être formés dans l'ébauche, et dans laquelle chaque mâchoire (40, 41) comprend un espacement (42) faisant face à l'autre mâchoire, ledit espacement (42) comprenant une saillie (43) hélicoïdale, de telle sorte que lorsque les mâchoires sont en butée l'une contre l'autre, les espacements forment la section transversale d'une perforation hélicoïdale comprenant des rainures de logement de copeaux.
